# EUROPEAN PATENT SPECIFICATION

(11) **EP 3 364 438 B1**
(45) Date of publication and mention of the grant of the patent: **06.03.2019**
(21) Application number: 17001132.4
(22) Date of filing: 30.06.2017
(51) Int. Cl.: H01H 33/666, H01H 33/42

(54) **RAIL CAR SWITCH UNIT**
SCHIENENFAHRZEUGSCHALTEINHEIT
UNITÉ DE COMMUTATION POUR VÉHICULE FERROVIAIRE

(30) Priority: 21.02.2017 JP 2017029769
(43) Date of publication of application: 22.08.2018
(73) Proprietor: Hitachi Industrial Equipment Systems Co., Ltd., Tokyo 101-0022 (JP)
(72) Inventor: Nakayama, Yasuaki, Tokyo 100-8280 (JP); Sato, Takashi, Tokyo 100-8280 (JP); Yabu, Masato, Tokyo 101-0022 (JP); Tamura, Kozo, Tokyo 101-0022 (JP); Tai, Yuuki, Tokyo 101-0022 (JP)
(74) Representative: Strehl Schübel-Hopf & Partner

(56) References cited:
- WO-A1-2015/178072
- US-A- 4 168 414
- US-A1- 2015 083 691

## Description

### Technical Field

The present invention relates to a switch unit which is mounted on a rail car.

### Background Art

A switch unit which is mounted on a rail car is disposed over the roof or under the floor of the rail car. As for the size of the switch unit, particularly the height and width are restricted from the viewpoints of the need for reduction of air resistance, height of the rail car during traveling through a tunnel, limited space on the car roof or the car bottom and so on.

For example, WO 2012/095895 describes a switch unit for a rail car. As shown in Figs. 5 to 7 of the document, the switch unit includes a power collector for collecting power from an overhead line, a switch unit connected to the power collector and disposed on the roof of the car, and a plurality of power cables connected to the switch unit, in which the switch unit is disposed over the roof and connected to the plural power cables. In this configuration, the switch unit includes eight bushings, four of which are each connected to a high voltage cable with one T-shaped cable head.

Further, WO 2015/178072 A1 discloses a switch unit from which the pre-characterising part of claim 1 starts out.

### Summary of the Invention

In the technique described in WO 2012/095895, the terminal portion of the switch unit is exposed and aerially insulated. The terminal portion has a high voltage as it is a current pathway and for the sake of safety, the roof of the car is supposed to have a ground potential. For this reason, it is essential to provide a sufficient distance between the terminal portion and the car roof. In addition, since the circuit breaker unit described in WO 2012/095895 has a structure in which a main body and a control box are vertically separated and connected to each other by a support member, it poses the following problem: inevitably the projected area of the unit is large as seen in the traveling direction and thus the air resistance during traveling of the rail car is large.

On the other hand, for the switch unit to be mounted on the roof or bottom of the rail car, available installation space is limited and many dimensional restrictions are put on it, so particularly it is desirable to decrease its height and width.

An object of the present invention is to provide a rail car switch unit which has a smaller height and a smaller width and can be installed in any place and ensure smooth operation of the switch unit.

In order to address the above problem, the invention provides a rail car switch unit as defined in the appended claims .

According to an aspect of the present invention, it is possible to provide a rail car switch unit which has a smaller height and a smaller width and can be installed in a place without restrictions and ensures smooth operation of the switch used there.

### Brief Description of the Drawings

Fig. 1 shows an example of the composition of a train of rail cars according to a first embodiment;
Fig. 2 is a feeding circuit diagram showing the composition of the train of rail cars according to the first embodiment;
Fig. 3 is an example of the composition of the train of rail cars according to the first embodiment;
Fig. 4 is a feeding circuit diagram showing the composition of the train of rail cars according to the first embodiment;
Fig. 5 is a plan view showing the configuration of the switch unit according to the first embodiment;
Fig. 6 is a sectional view showing the configuration of the switch unit according to the first embodiment;
Fig. 7 is a side view of the switch unit according to the first embodiment;
Fig. 8 is a plan view showing the switch unit according to the first embodiment to which cables are attached;
Fig. 9 is a plan view of a switch unit according to a second embodiment;
Fig. 10 is a plan view of a switch unit according to a third embodiment;
Fig. 11 is a side view of a switch unit according to a fourth embodiment;
Fig. 12 is a plan view of a switch unit according to a fifth embodiment;
Fig. 13 is a side view of a switch unit according to a sixth embodiment;
Fig. 14 is a sectional view of a switch unit according to a first modification;
Fig. 15 is a sectional view of a switch unit according to a second modification; and
Fig. 16 is a sectional view of a switch unit according to a third modification.

### Description of the Embodiments

The rail car switch unit according to the present invention is a solid-insulated switch device whose surface is grounded. The unit is installed in a manner that its longitudinal side is along the car traveling direction, bushings for connection with cables are disposed perpendicularly to the car traveling direction, namely upward, downward, right or left and an operation mechanism case is disposed virtually in alignment with the switch in order to decrease the height and width of the unit.

Whereas this configuration makes it possible to decrease the height and width, the switch and the operation mechanism which are virtually in alignment must be insulated from each other. Therefore, an aerial insulating operation rod which connects the switch and the operation mechanism is installed between them so that they are insulated from each other. In order to increase the insulation distance, the aerial insulating operation rod must be lengthened, but if the rod is lengthened, centering accuracy might deteriorate and smooth operation of the switch might be impaired. For this reason, in the rail car switch unit according to the present invention, the axis of movement including the aerial insulating operation rod is pivotally supported by two bearings so as to improve the centering accuracy of the aerial insulating operation rod and ensure smooth operation of the switch.

Next, the preferred embodiments of the present invention will be described in detail referring to drawings. The embodiments described below are just examples and the present invention is not limited to the concrete embodiments mentioned below. Obviously the present invention may be embodied in various forms including the embodiments mentioned below.

### First Embodiment

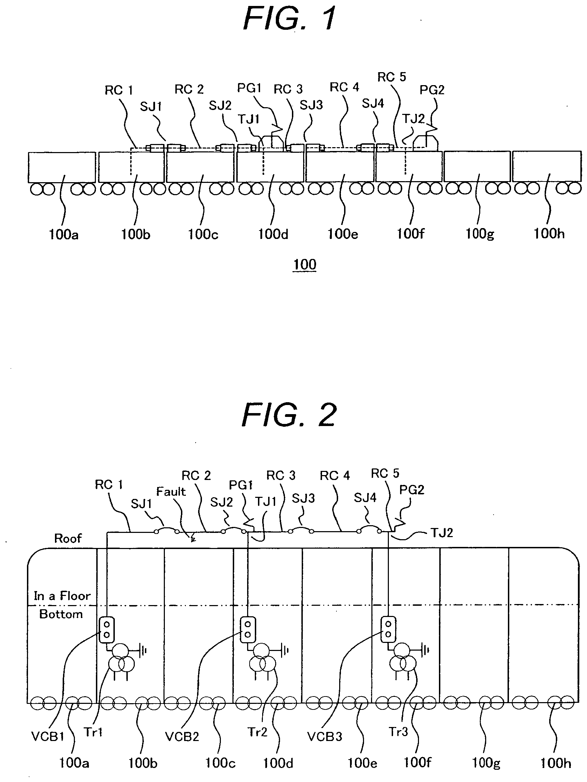

A first embodiment will be described referring to Figs. 1 to 6.

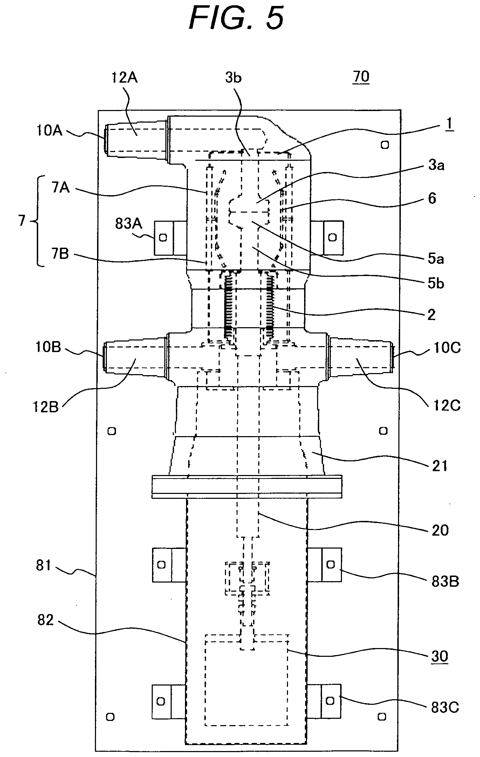

Fig. 1 shows an example of the composition of a train of rail cars 100 according to the first embodiment. As Fig. 1 indicates, the train of rail cars 100 is composed of eight cars 100a to 100h. High-voltage pull-through cables RC1, RC2, RC3, RC4, and RC5 are disposed over the roofs of these cars and pantographs PG1 and PG2 are connected to the high-voltage pull-through cables RC3 and RC5 to receive electric power from electric wires (not shown). The cables are connected between cars by straight joints SJ1, SJ2, SJ3, and SJ4 and branched toward the bottoms of the cars by T joints TJ1 and TJ2. As will be described later referring to Fig. 5, etc., the T joint TJ1 and the straight joint SJ2 are integrated to constitute a switch unit 70a and the T joint TJ2 and the straight joint SJ4 are integrated to constitute a switch unit 70b.

Next, the feeding circuit of the rail cars 100 will be described referring to Fig. 2. As shown in Fig. 2, vacuum breakers for receiving power, VCB1, VCB2, and VCB3 and main transformers Tr1, Tr2, and Tr3 are installed on the bottoms of the second car 100b, fourth car 100d, and sixth car 100f respectively.

The high-voltage pull-through cable RC1 of the second car 100b is directly connected to the primary side of the receiving vacuum breaker VCB1 installed on the bottom of the car, the secondary side of the receiving vacuum breaker VCB1 is connected to the primary winding of the main transformer Tr1, the secondary winding of the main transformer Tr1 supplies power to a motor and its tertiary winding supplies power to auxiliary devices such as an air conditioner and a lighting fixture. Similarly, the high-voltage pull-through cables of the fourth car 100d and sixth car 100f which are branched by the T joints TJ1 and TJ2 respectively are connected to the primary sides of the receiving vacuum breakers VCB2 and VCB3 installed on the bottoms of the cars respectively, the secondary sides of the receiving vacuum breakers VCB2 and VCB3 are connected to the primary windings of the main transformers Tr2 and Tr3 respectively, the secondary windings of the main transformers Tr2 and Tr3 supply power to a motor and the tertiary windings supply power to auxiliary devices.

As mentioned above, the receiving vacuum breakers VCB1, VCB2, and VCB3 and the main transformers Tr1, Tr2, and Tr3 are located on the car bottoms and the other electric devices (RC, SJ, PG, TJ) are located on the roofs. Since for a worker it is inconvenient to ascend to the roof for his/her work, it is desirable to minimize the need for ascending to the roof in his/her work. In addition, in installing a device on the car roof, the available installation space on the roof, particularly in the height direction, is considerably limited and decrease in the height of an electric device is demanded.

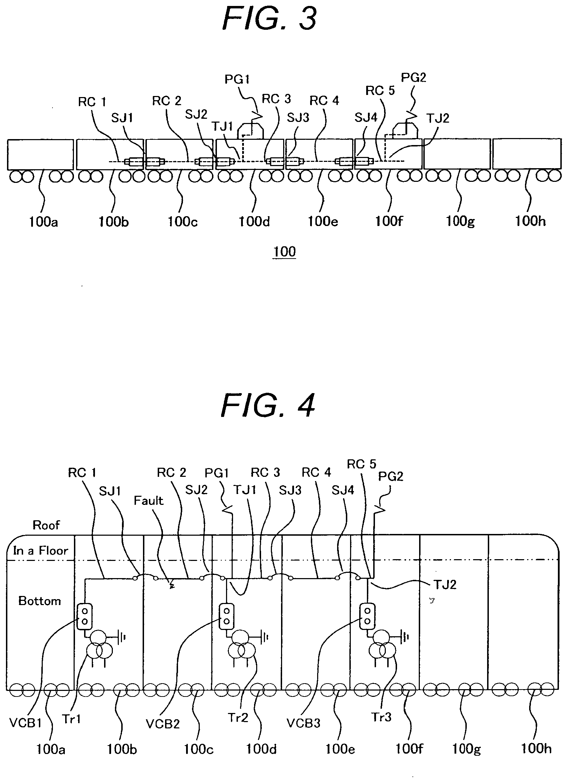

Although Figs. 1 and 2 show an example of the arrangement of RC, SJ and TJ on the roofs, the high-voltage pull-through cables RC1, RC2, RC3, RC4, and RC5, instead, straight joints SJ1, SJ2, SJ3, and SJ4, and T joints TJ1 and TJ2 may be mounted on the bottoms as shown in Figs. 3 and 4. In the latter case, high voltage cables are pulled from the pantographs PG1 and PG2 into the cars and connected to the high-voltage pull-through cables RC3 and RC5. Even when they are mounted on the bottoms as mentioned above, there are considerable restrictions on available space as when they are mounted on the roofs and decrease in the size of an electric device is demanded.

In the circuit shown in Fig. 2 or Fig. 4, if an earth fault Fault occurs in the high-voltage pull-through cable RC2 of the third car 100c, the switch unit 70a is activated according to an external command to open the straight joint SJ2 automatically so that the main transformer Tr1 which would be affected by the earth fault Fault, and the motor connected to it are disconnected. At this time, the main transformers Tr2 and Tr3 which will not be affected by the earth fault Fault remain connected, so the rail cars 100 can continue travelling by the use of the motors connected to them.

Since this embodiment is explained on the assumption that an earth fault occurs at the spot marked "Fault" in Figs. 2 and 4, in order to prevent the spread of the fault, the switch unit 70a is activated to open the straight joint SJ2. However, needless to say, the switch unit 70 to be activated or the straight joint SJ to be used for disconnection differs depending on the spot at which an earth fault occurs. This configuration allows a high voltage cable including a defect and a normal high voltage cable to be automatically separated without the need for a worker to ascend to the roof 72 of the car.

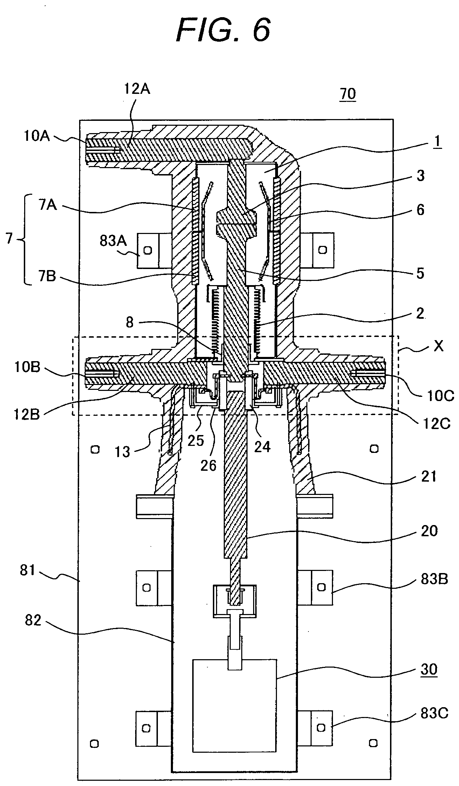

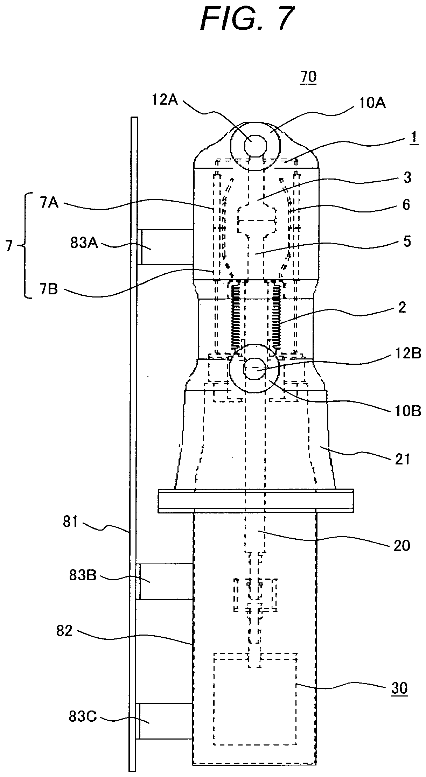

Next, the switch unit 70 according to this embodiment which integrally combines a T joint TJ and a straight joint SJ will be described referring to Figs. 5 to 7. Fig. 5 is a plan view which schematically illustrates the configuration of the switch unit 70 according to this embodiment which is fixed on a base 81 through stays 83, in which the internal structure is indicated by dotted lines. Fig. 6 is a sectional view of the switch unit 70, taken along a plane including a movable electrode 5a (which will be described later) and the center axis of the aerial insulating operation rod 20. Fig. 7 is a side view of the switch unit 70 shown in Fig. 5. The switch unit 70, which is fixed on the base 81, is mounted on a rail car.

As shown here, the switch unit 70 has a vacuum interrupter 1 which includes a fixed electrode 3a, a movable electrode 5a which comes into or out of contact with the fixed electrode 3a, an arc shield 6 covering the peripheries of the fixed electrode 3a and movable electrode 5a, and a cylindrical ceramic insulating cylinder 7 supporting the arc shield 6 and constituting part of an outer case, a bellows 2 and so on.

The outer case of the vacuum interrupter 1 is structured to cover both the ends of the ceramic insulating cylinder 7 with end plates to keep its internal space vacuum. The fixed electrode 3a is connected to a fixed conductor 3b and the fixed conductor 3b is pulled out of the vacuum interrupter 1 and electrically connected to a bushing conductor 12A on the fixed conductor 3b side. In Figs. 5 to 7, the combination of the fixed electrode 3a and fixed conductor 3b may be designated by reference sign 3. The movable electrode 5a is connected to a movable conductor 5b and the movable conductor 5b is pulled out of the vacuum interrupter 1 and electrically connected to bushing conductors 12B and 12C on the movable conductor 5b side. In Figs. 5 to 7, the combination of the movable electrode 5a and movable conductor 5b may be designated by reference sign 5. The bushing conductor 12A on the fixed conductor 3b side and the bushing conductors 12B and 12C on the movable conductor 5b side are molded by an insulating case 21 made of a solid insulator such as epoxy resin.

On the movable side of the vacuum interrupter 1, the bellows 2 is located between the movable conductor 5b and the movable side end plate so that the movable conductor 5b can move while the vacuum state of the vacuum interrupter 1 is maintained. Also, on the movable side of the vacuum interrupter 1, an electromagnetic operation device 30 is provided to operate the aerial insulating operation rod 20. Although details of the electromagnetic operation device 30 are omitted here, for example it may combine a permanent magnet and an electromagnet with a spring to generate a driving force by turning ON or OFF the power to the coil of the electromagnet. Through the electromagnetic operation device 30, a movable electrode drive axis which integrally couples the aerial insulating operation rod 20 and the movable conductor 5b through a metal adapter 24 is operated to enable the fixed electrode 3a and the movable electrode 5a to come into or out of contact with each other freely while keeping a sufficient insulation distance between the vacuum interrupter 1 and the electromagnetic operation device 30. Furthermore, the metal adapter 24 which moves together with the movable conductor 5b and a flexible conductor 27 which connects the metal adapter 24 and the bushing conductors are interposed between the movable conductor 5b and the bushing conductors 12B and 12C to ensure both electric conductivity and movability. A metal shield 13 which covers the outer periphery of the tip of the aerial insulating operation rod 20 contributes to suppression of electric field concentration on the tip of the aerial insulating operation rod 20 and a housing 25.

As shown in Fig. 6, in the switch unit 70 according to this embodiment, a guide 8 and a bearing 26 are provided to regulate the moving direction of the movable electrode drive axis in which the movable electrode 5a, movable conductor 5b, metal adapter 24, and aerial insulating operation rod 20 are integrated, and enhance the sliding smoothness. The guide 8 pivotally supports the movable conductor 5b of the movable electrode drive axis and the bearing 26 held by the housing 25 pivotally supports the metal adapter 24 of the movable electrode drive axis. This pivotal support by the two components, or the guide 8 and bearing 26, improves the centering accuracy of the movable conductor 5b, metal adapter 24 and aerial insulating operation rod 20 which are integrated and coaxially arranged in a row in the traveling direction and enhances their sliding smoothness. Although Fig. 6 shows a short tube with a flange at one end as an example of the guide 8 and bearing 26, instead another form may be adopted for them.

The insulating case 21 not only closely covers the vacuum interrupter 1 and the bushing conductors 12A, 12B, and 12C but also covers the periphery of the aerial insulating operation rod 20. The space around the aerial insulating operation rod 20 is sealed by the insulating case 21 and sealing means and an insulating gas such as dry air or SF6 gas is encapsulated in the space. As the sealing means used here, a linear seal or bellows is adopted.

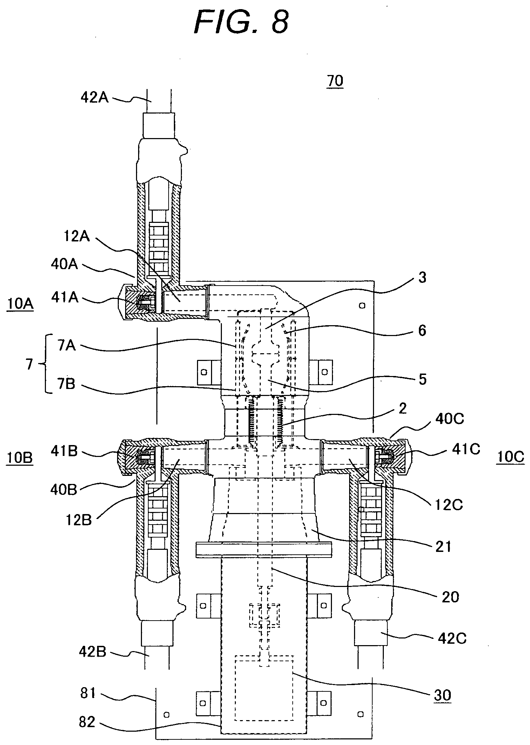

Next, the switch unit 70 to which T-shaped cable heads 40A, 40B, and 40C are connected will be described referring to Fig. 8. As shown in Fig. 8, since in the switch unit 70 according to this embodiment the vacuum interrupter 1 and the electromagnetic operation device 30 are virtually in alignment in the front-back direction, no interference occurs between the electromagnetic operation device 30 and the T-shaped cable heads 40A, 40B, and 40C when cables are connected, so the height and width of the switch unit 70 after cable connection can be decreased.

In the switch unit 70 according to this embodiment as described above, the height and width of the switch unit 70 after cable connection can be decreased, so the freedom in selection of the place of installation in a rail car can be increased. Furthermore, since the centering accuracy of the movable electrode drive axis is improved, smooth movement of the vacuum interrupter 1 is ensured.

### First Modification

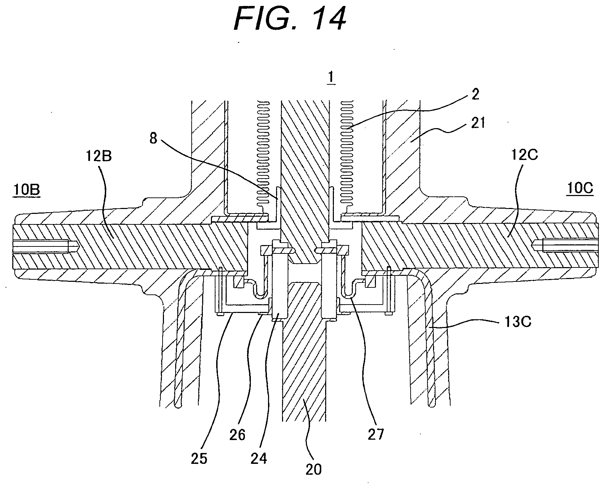

The switch unit 70 according to a first modification will be described referring to Fig. 14. Fig. 14 corresponds to the X part shown in Fig. 6 in enlarged form and description of the same components as described above is omitted here.

Whereas the mechanical features of the vicinity of the bearing 26 have been focused in the above explanation of the first embodiment, the electric features of the vicinity of the bearing 26 will be focused in the following explanation of the first modification. In this modification, a material with high electric resistance such as resin (non-conductive material) is used for the bearing 26. Consequently, between the movable conductor 5b and the bushing conductor 12 a current flows only in a normal path including the flexible conductor 27 and a current does not flow in an abnormal path including the metal adapter 24, the bearing 26, the housing 25, and the bolt for fixing the housing 25, so that adhesion between the metal adapter 24 and the bearing 26 is prevented and smooth movement of the movable conductor 5b is ensured.

### Second Modification

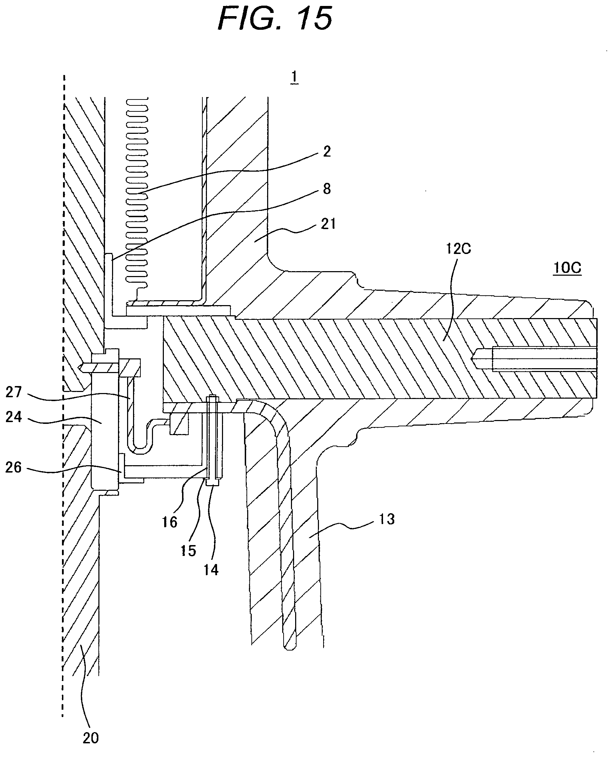

The switch unit 70 according to a second modification will be described referring to Fig. 15. Fig. 15 corresponds to the right side in Fig. 14 in enlarged form and description of the same components as described above is omitted here.

Whereas in the first modification a material with high electric resistance such as resin (non-conductive material) is used for the bearing 26 in order to prevent the flow of a current in an abnormal path, in this modification a material with high electric resistance such as resin (non-conductive material) is used for members for fixing the housing 25 in order to prevent the flow of a current in an abnormal path.

Specifically, an insulating bolt 14 with an insulating washer 15 attached to it is inserted into an insulating sleeve 16 attached to the housing 25 and fastened onto the bushing conductor 12 to fix the housing 25 on the shield 28 and bushing conductor 12. Consequently, a current does not flow in an abnormal path including the metal adapter 24 and the bearing 26, so that adhesion between the metal adapter 24 and the bearing 26 is prevented and smooth movement of the movable conductor 5b is ensured.

### Third Modification

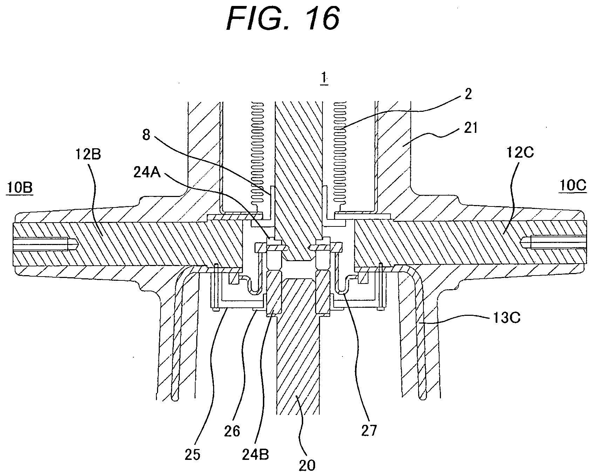

The switch unit 70 according to a third modification will be described referring to Fig. 16. Fig. 16 corresponds to the X part in Fig. 6 in enlarged form and description of the same components as described above is omitted here.

Whereas in the first modification a material with high electric resistance such as resin (non-conductive material) is used for the bearing 26 in order to prevent the flow of a current in an abnormal path, in this modification a combination adapter is used instead of the monolithic metal adapter 24 in order to prevent the flow of a current in an abnormal path.

Specifically, this modification uses the combination adapter which is composed of a conductive member 24A made of conductive material such as metal which is connected to the flexible conductor 27, and a high electric resistance member (insulating member) 24B made of a material with high electric resistance (insulating material) such as resin which is not connected to the flexible conductor 27. The conductive member 24A is electrically connected to the bushing conductor 12 and the high electric resistance member (insulating member) 24B is in contact with the bearing 26. Consequently, a current does not flow in an abnormal path including the conductive member 24A and high electric resistance member (insulating member) 24B of the adapter and the bearing 26 so that adhesion between the high electric resistance member (insulating member) 24B and the bearing 26 is prevented and smooth movement of the movable conductor 5b is ensured.

### Second Embodiment

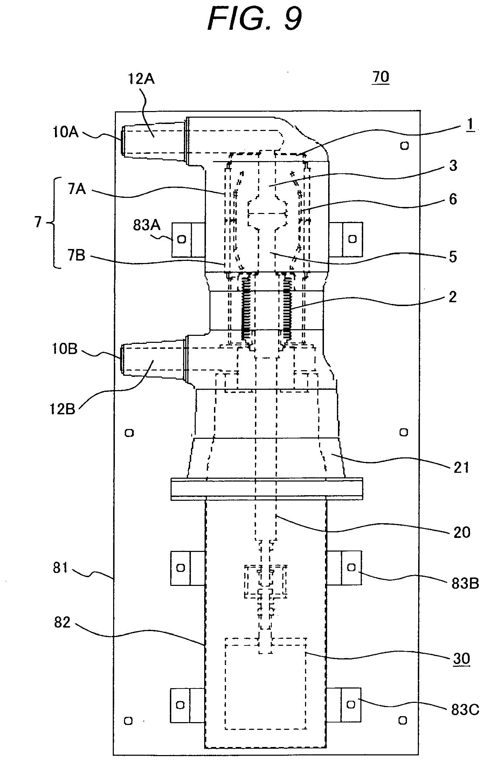

The switch unit 70 according to a second embodiment will be described referring to the plan view of Fig. 9. Description of the same components as in the first embodiment is omitted here.

In this embodiment, only one bushing is provided on the movable side. Specifically, the switch unit 70 according to this embodiment has a function as a straight joint SJ which connects a cable 42A and a cable 42B but does not have a function as a T joint TJ. In this embodiment, a cable on the movable side cannot be branched but the width of the unit can be decreased as in the first embodiment. This embodiment can be applied to a straight switch unit in which a cable is not branched.

### Third Embodiment

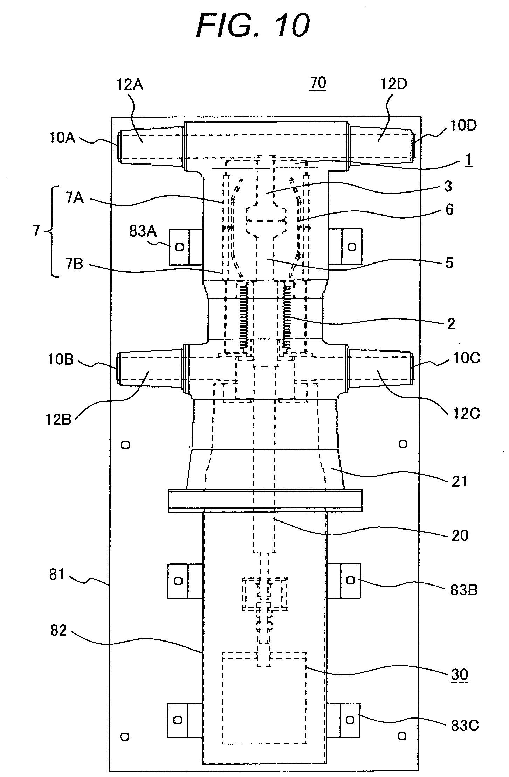

The switch unit 70 according to a third embodiment will be described referring to the plan view of Fig. 10. Description of the same components as in the first embodiment is omitted here.

In this embodiment, two bushings are provided on the fixed side as well. Specifically, the switch unit 70 according to this embodiment has a function as a straight joint SJ which connects the cable 42A and cable 42B, a function as a T joint TJ which branches the cable 42C on the movable side, and a function as a T joint TJ which branches the cable 42D on the fixed side. In this embodiment, cables can be branched not only on the movable side but also on the fixed side, so the range of choices of circuit configuration is expanded.

### Fourth Embodiment

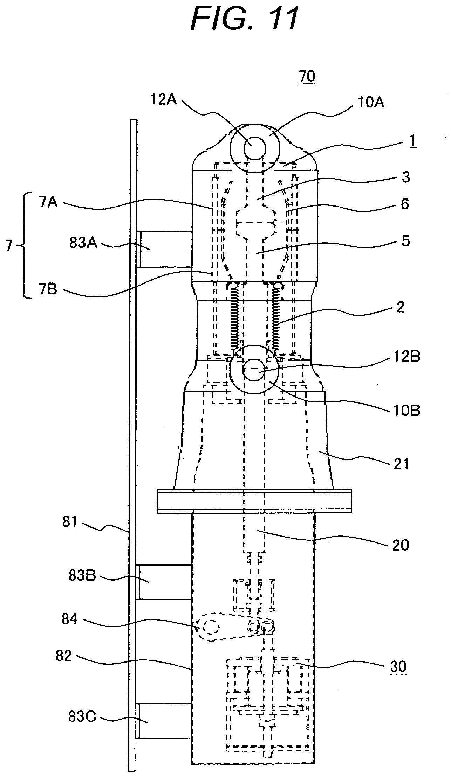

The switch unit 70 according to a fourth embodiment will be described referring to the side view of Fig. 11. Description of the same components as in the first embodiment is omitted here.

Whereas in the first embodiment the vacuum interrupter 1, aerial insulating operation rod 20, and electromagnetic operation device 30 are aligned as shown in Fig. 7, in this embodiment the aerial insulating operation rod 20 and electromagnetic operation device 30 are not aligned but are connected to each other through a link 84 as shown in Fig. 11. This eliminates the need for making the stroke of the electromagnetic operation device equal to the stroke of the switching part and even if the output power of the electromagnetic operation device 30 is smaller than in the first embodiment, the link 84, which functions as a lever, enables the vacuum interrupter 1 to operate properly, so these components can be selected independently. Furthermore, adjustment workability is improved.

### Fifth Embodiment

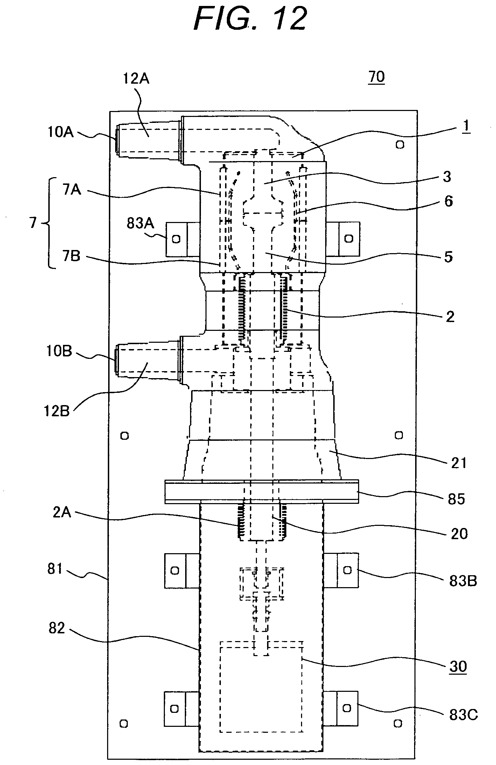

The switch unit 70 according to a fifth embodiment will be described referring to Fig. 12. Description of the same components as in the first embodiment is omitted here.

In this embodiment, a bellows 2A which seals an insulating gas between the aerial insulating operation rod 20 and the flange 85 is added to the structure shown in Fig. 5, etc. When the vacuum interrupter 1 is in its closed state, as the electromagnetic operation device 30 is activated to move the movable electrode 5a away from the fixed electrode 3a, the bellows 2 on the movable electrode 5a side compresses and the bellows 2A on the opposite side expands, which decreases the internal space of the bellows 2 and increases the internal space of the bellows 2A. In this embodiment, as shown in Fig. 12, the diameter of the bellows 2 is virtually equal to the diameter of the bellows 2A and the amount of compression of the bellows 2, disposed coaxially with the bellows 2A, is equal to the amount of expansion of the bellows 2A, and thus the amount of decrease in volume due to the compression of the bellows 2 is virtually equal to the amount of increase in volume due to the expansion of the bellows 2A. In other words, when the vacuum interrupter 1 is switched from the closed state to the open state, the space around the aerial insulating operation rod 20 sandwiched between both the bellows neither increases nor decreases. For the same reason, when the vacuum interrupter 1 is switched from the open state to the closed state, again the space around the aerial insulating operation rod 20 sandwiched between both the bellows neither increases nor decreases.

Consequently, even when the switching part is activated to switch to the open or close state, the change in volume around the aerial insulating operation rod 20 is small and thus the force required for switching operation can be small.

### Sixth Embodiment

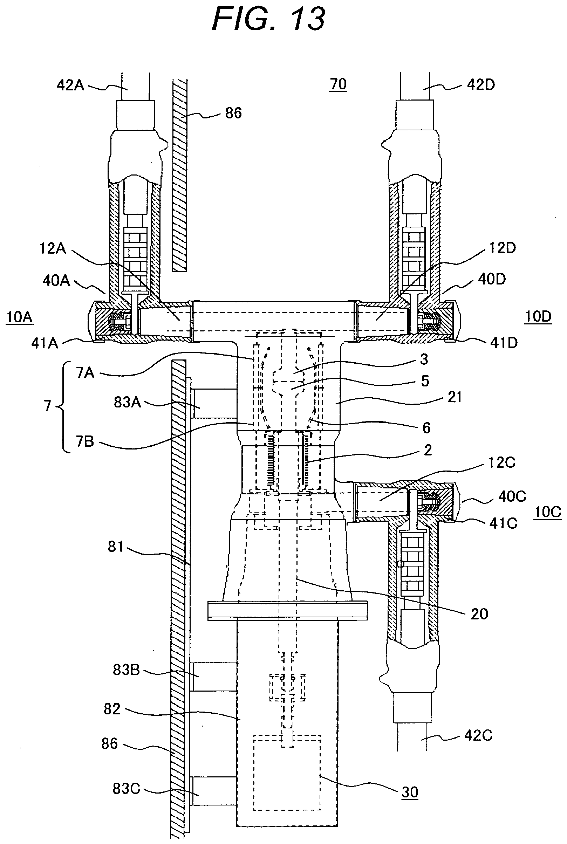

The switch unit 70 according to a sixth embodiment will be described referring to Fig. 13. Description of the same components as in the first embodiment is omitted here.

In this embodiment, the base 81 of the switch unit is mounted on a car roof 86 and a fixed bushing and a movable bushing are located perpendicularly to the plane of the base 81. Due to a bushing conductor 12A which protrudes into the inside of the car under the car roof 86, a cable connected to the bushing conductor 12A can be routed under the car roof 86. The place in which the base 81 is mounted is not limited to a place on the car roof 86 but it may be mounted under the car roof, over the car bottom or under the car bottom. In any case, it is possible to install the bushing 12A and route the cable connected to it on the opposite side across the surface on which the switch unit is mounted. Consequently, devices which are mounted on the car, including the switch unit, can be disposed more freely.

### Reference Signs List

- 1: Vacuum interrupter
- 2, 2A: Bellows
- 3a: Fixed electrode
- 3b: Fixed conductor
- 5a: Movable electrode
- 5b: Movable conductor
- 6: Arc shield
- 7: Ceramic insulating cylinder
- 8: Guide
- 10, 10A, 10B, 10C, 10D: Electric connection
- 12, 12A, 12B, 12C, 12D: Bushing conductor
- 13: Metal shield
- 14: Insulating bolt
- 15: Insulating washer
- 16: Insulating sleeve
- 20: Aerial insulating operation rod
- 21: Insulating case
- 24: Metal adapter
- 24A: Conductive member
- 24B: Insulating member
- 25: Housing
- 26: Bearing
- 27: Flexible conductor
- 28: Shield
- 30: Electromagnetic operation device
- 40, 40A, 40B, 40C, 40D: T-shaped cable head
- 41, 41A, 41B, 41C, 41D: Insulating plug
- 42, 42A, 42B, 42C, 42D: Cable
- 70, 70a, 70b: Switch unit
- 81: Base
- 82: Mechanism case
- 83: Stay
- 84: Link
- 85: Flange
- 86: Car roof
- 100: Rail cars

## Claims

1. A rail car switch unit connected to a first cable head and a second cable head which are connected to different circuits, comprising:
a switch (1) having a fixed electrode (3a) and a movable electrode (5a) which freely come into or out of contact with each other;
a first bushing conductor (12A, 12D) electrically connected to the fixed electrode and connected to the first cable head;
a second bushing conductor (12B, 12C) electrically connected to the movable electrode and connected to the second cable head;
a movable conductor (5b) connected to the movable electrode;
an aerial insulating operation rod (20) disposed coaxially with the movable conductor;
an adapter (24) coupling the movable conductor and the aerial insulating operation rod coaxially;
an operation device (30) disposed virtually in alignment with the switch and the aerial insulating operation rod;
a first support member (8) supporting the movable conductor; and
an insulating case (21) with a ground potential, covering the switch, the first bushing conductor, and the second bushing conductor,
**characterised in that**
the first support member (8) pivotally supports the movable conductor (5b), and
a second support member (26) pivotally supports the adapter (24).

2. The rail car switch unit according to Claim 1, wherein the second support member (26) is made of an insulating material.

3. The rail car switch unit according to Claim 1, wherein
the second support member (26) is fixed to the second bushing conductor through a housing (25), and
an insulating bolt (14) and an insulating sleeve (16) are used to fix the housing and the second bushing conductor.

4. The rail car switch unit according to Claim 1, wherein
the adapter (24) includes a conductive member (24A) and an insulating member (24B),
the conductive member is electrically connected to the second bushing conductor, and
the insulating member is in contact with the second support member.

5. The rail car switch unit according to Claim 1, wherein the bushing conductors (12) and the switch (1) are disposed virtually in the same plane.

6. The rail car switch unit according to any one of Claims 1 to 5, wherein the bushing conductors (12) are located in a direction virtually perpendicular to a direction in which the movable electrode (5a) moves.

7. The rail car switch unit according to any one of Claims 1 to 5, wherein a plurality of bushings (12) are provided on a movable side or fixed side or both.

8. The rail car switch unit according to any one of Claims 1 to 5, wherein the aerial insulating operation rod (20) and the operation device (30) are directly connected.

9. The rail car switch unit according to any one of Claims 1 to 5, wherein the aerial insulating operation rod (20) and the operation device (30) are connected through a link (84).

10. The rail car switch unit according to any one of Claims 1 to 5, wherein a space around the insulating operation rod (20) and an insulating operation rod side space of a movable side bellows (2) of the switch are communicated and sealed.

11. The rail car switch unit according to any one of Claims 1 to 5, wherein the second support member (26) is held by a housing (25) connected to the second bushing conductor (12B, 12C) .

## Patentansprüche

1. Schienenfahrzeugschalteinheit, die mit einem ersten Kabelkopf und einem zweiten Kabelkopf verbunden ist, die an unterschiedliche Schaltkreise angeschlossen sind, umfassend:
einen Schalter (1) mit einer festen Elektrode (3a) und einer beweglichen Elektrode (5a), die frei in oder außer Kontakt miteinander kommen können;
einen ersten Buchsenleiter (12A, 12D), der elektrisch mit der festen Elektrode sowie mit dem ersten Kabelkopf verbunden ist;
einen zweiten Buchsenleiter (12B, 12C), der elektrisch mit der beweglichen Elektrode sowie mit dem zweiten Kabelkopf verbunden ist;
einen beweglichen Leiter (5b), der mit der beweglichen Elektrode verbunden ist;
einen freien, isolierenden Betätigungsstab (20), der koaxial zum beweglichen Leiter angeordnet ist;
einen Adapter (24), der den beweglichen Leiter und den freien, isolierenden Betätigungsstab koaxial miteinander koppelt;
eine Betätigungsvorrichtung (30), die zum Schalter und zum freien, isolierenden Betätigungsstab praktisch fluchtend angeordnet ist;
ein erstes Stützelement (8), das den beweglichen Leiter stützt; und
ein isolierendes Gehäuse (21) auf Massepotential, das den Schalter, den ersten Buchsenleiter und den zweiten Buchsenleiter umgibt,
**dadurch gekennzeichnet, dass**
das erste Stützelement (8) den beweglichen Leiter (5b) schwenkbar stützt, und
ein zweites Stützelement (26) den Adapter (24) schwenkbar stützt.

2. Schienenfahrzeugschalteinheit nach Anspruch 1, wobei das zweite Stützelement (26) aus isolierendem Material hergestellt ist.

3. Schienenfahrzeugschalteinheit nach Anspruch 1, wobei
das zweite Stützelement (26) über ein Gehäuse (25) am zweiten Buchsenleiter befestigt ist, und
zur Befestigung des Gehäuses und des zweiten Buchsenleiters ein isolierender Bolzen (14) und eine isolierende Hülse (16) verwendet sind.

4. Schienenfahrzeugschalteinheit nach Anspruch 1, wobei
der Adapter (24) ein leitfähiges Element (24A) und ein isolierendes Element (24B) enthält,
das leitfähige Element elektrisch mit dem zweiten Buchsenleiter verbunden ist, und
sich das isolierende Element in Kontakt mit dem zweiten Stützelement befindet.

5. Schienenfahrzeugschalteinheit nach Anspruch 1, wobei die Buchsenleiter (12) und der Schalter (1) praktisch in der gleichen Ebene angeordnet sind.

6. Schienenfahrzeugschalteinheit nach einem der Ansprüche 1 bis 5, wobei die Buchsenleiter (12) in einer Richtung angeordnet sind, die praktisch zur Richtung senkrecht steht, in der sich die bewegliche Elektrode (5a) bewegt.

7. Schienenfahrzeugschalteinheit nach einem der Ansprüche 1 bis 5, wobei auf der beweglichen Seite und/oder der festen Seite mehrere Buchsen (12) vorgesehen sind.

8. Schienenfahrzeugschalteinheit nach einem der Ansprüche 1 bis 5, wobei der freie, isolierende Betätigungsstab (20) und die Betätigungsvorrichtung (30) unmittelbar miteinander verbunden sind.

9. Schienenfahrzeugschalteinheit nach einem der Ansprüche 1 bis 5, wobei der freie, isolierende Betätigungsstab (20) und die Betätigungsvorrichtung (30) über eine Kopplung (84) miteinander verbunden sind.

10. Schienenfahrzeugschalteinheit nach einem der Ansprüche 1 bis 5, wobei der Raum um den isolierenden Betätigungsstab (20) und ein Raum auf Seiten des isolierenden Betätigungsstabs eines Balgs (2) auf der beweglichen Seite des Schalters miteinander in Verbindung stehen und abgedichtet sind.

11. Schienenfahrzeugschalteinheit nach einem der Ansprüche 1 bis 5, wobei das zweite Stützelement (26) von einem Gehäuse (25) gehalten wird, das mit dem zweiten Buchsenleiter (12B, 12C) verbunden ist.

## Revendications

1. Unité de commutation pour véhicule ferroviaire connectée à une première tête de câble et une deuxième tête de câble qui sont connectées à des circuits différents, comprenant :
un commutateur (1) ayant une électrode fixe (3a) et une électrode mobile (5a) qui viennent librement en et hors de contact l'une avec l'autre ;
un premier conducteur de traversée (12A, 12D) électriquement connecté à l'électrode fixe et connecté à la première tête de câble ;
un deuxième conducteur de traversée (12B, 12C) électriquement connecté à l'électrode mobile et connecté à la deuxième tête de câble ;
un conducteur mobile (5b) connecté à l'électrode mobile ;
une tige opérationnelle (20) d'isolation d'antenne disposée coaxialement avec le conducteur mobile ;
un adaptateur (24) couplant le conducteur mobile et la tige opérationnelle d'isolation d'antenne coaxialement ;
un dispositif opérationnel (30) disposé virtuellement en alignement avec le commutateur et la tige opérationnelle d'isolation d'antenne ;
un premier élément support (8) supportant le conducteur mobile ; et
un boîtier d'isolation (21) avec un potentiel de terre, recouvrant le commutateur, le premier conducteur de traversée, et le deuxième conducteur de traversée,
**caractérisée en ce que**
le premier élément support (8) supporte en pivotement le conducteur mobile (5b), et
un deuxième élément support (26) supporte en pivotement l'adaptateur (24).

2. Unité de commutation pour véhicule ferroviaire selon la revendication 1, dans laquelle le deuxième élément support (26) est constitué d'un matériau isolant.

3. Unité de commutation pour véhicule ferroviaire selon la revendication 1, dans laquelle
le deuxième élément support (26) est fixé au deuxième conducteur de traversée par l'intermédiaire d'un logement (25), et
un boulon d'isolation (14) et une gaine d'isolation (16) sont utilisés pour fixer le logement et le deuxième conducteur de traversée.

4. Unité de commutation pour véhicule ferroviaire selon la revendication 1, dans laquelle
l'adaptateur (24) inclut un élément conducteur (24A) et un élément d'isolation (24B),
l'élément conducteur est électriquement connecté au deuxième conducteur de traversée, et
l'élément d'isolation est en contact avec le deuxième élément support.

5. Unité de commutation pour véhicule ferroviaire selon la revendication 1, dans laquelle les conducteurs de traversée (12) et le commutateur (1) sont disposés virtuellement dans le même plan.

6. Unité de commutation pour véhicule ferroviaire selon l'une quelconque des revendications 1 à 5, dans laquelle les conducteurs de traversée (12) sont situés dans un sens virtuellement perpendiculaire à un sens dans lequel l'électrode mobile (5a) se déplace.

7. Unité de commutation pour véhicule ferroviaire selon l'une quelconque des revendications 1 à 5, dans laquelle une pluralité de traversées (12) sont prévues sur un côté mobile ou un côté fixe ou les deux.

8. Unité de commutation pour véhicule ferroviaire selon l'une quelconque des revendications 1 à 5, dans laquelle la tige opérationnelle (20) d'isolation d'antenne et le dispositif opérationnel (30) sont directement connectés.

9. Unité de commutation pour véhicule ferroviaire selon l'une quelconque des revendications 1 à 5, dans laquelle la tige opérationnelle (20) d'isolation d'antenne et le dispositif opérationnel (30) sont connectés par l'intermédiaire d'une liaison (84).

10. Unité de commutation pour véhicule ferroviaire selon l'une quelconque des revendications 1 à 5, dans laquelle un espace autour de la tige opérationnelle (20) d'isolation et un espace de côté tige opérationnelle d'isolation d'un soufflet latéral mobile (2) du commutateur sont mis en communication et scellés.

11. Unité de commutation pour véhicule ferroviaire selon l'une quelconque des revendications 1 à 5, dans laquelle le deuxième élément support (26) est maintenu par un logement (25) connecté au deuxième conducteur de traversée (12B, 12C).
